# EUROPEAN PATENT APPLICATION

(11) **EP 3 162 848 A1**
(43) Date of publication of application: **03.05.2017**
(21) Application number: 15821740.6
(22) Date of filing: 19.05.2015
(51) Int. Cl.: C08L 23/00, C08L 7/00, C08L 21/00, C08J 9/04

(54) **FOAM FOR WASHING CONCRETE PUMP**

(30) Priority: 16.07.2014 KR 20140090042
(71) Applicant: Fine Chemical Co., Ltd., Gimhae-si, Gyeongsangnam-do 621-801 (KR)
(72) Inventor: LEE, Sung Yull, Busan 607-753 (KR)
(74) Representative: Prüfer & Partner mbB Patentanwälte · Rechtsanwälte
(86) International application number: PCT/KR2015/004995
(87) International publication number: WO 2016/010247

(57) **Abstract**

Provided is a method for manufacturing a concrete pump cleaning foam. The method comprises: providing a mixture of a polymer containing an olefin block copolymer (OBC) having a DSC melting point of 100 °C or higher and a natural or synthetic rubber, a liquid softening agent, and one or more additives selected from the group consisting of a crosslinking agent, a foaming agent, a metal oxide, stearic acid, an antioxidant, zinc stearate, titanium dioxide, a crosslinking coagent, and a pigment; placing the mixture in a mold and pressurizing the mixture at elevated temperature to form a polymer foam; and after the foaming, polishing the surface of the polymer foam to separate closed cells into a surface.

## Description

### Technical Field

The present disclosure relates to a cleaning foam for concrete pump, and more specifically to a concrete pump cleaning foam which is easy to clean after use and can be used for a long time.

### Background Art

A concrete pump refers to a device that transfers concrete to a high place at high pressure via a concrete pipe. When this transfer work is over, it is necessary to eliminate concrete residues adhering to the inside of the pipe immediately. In a usual method, however, it is necessary to remove the shape of a sphere having a diameter slightly larger than the pipe inner diameter at the end of the pipe and a cylindrical foam are inserted, and when sucked in vacuum from the other side, concrete residue is pushed out into the foam, and the inner surface of the pipe is cleaned. For better cleaning, the foam is required to have a slightly larger diameter than the inner diameter of the pipe.

The material of the foam used here is urethane foam or natural rubber foam. Because urethane form lacks elasticity and easy to tear off regardless its cheap price, natural rubber foam is mainly used. Urethane foam and natural rubber foam use all-open cells; the reason is first, urethane foam presents only all open-celled products, and natural rubber foam is difficult to manufacture closed-cell foams having a thickness of 100 mm or more whereas is easier to manufacture open-cell foams having thicker products. Secondly, to clean the concrete pump, it is necessary to form a soft (*i.e.* low compressive strength) foam to be easily entered by pushing a foam of a larger diameter than the inner diameter of the pipe, but closed-cell foams do not produce smooth (*i.e.* low compressive strength) products. On the other hand, in open-cell foam, since air of air bubbles penetrates, it is easy to make a soft product with low compressive strength. Thirdly, the open-cell foam of natural rubber uses an inorganic foaming agent such as sodium bicarbonate (NaHCO₃) as a foaming agent at the time of production, but sodium bicarbonate is in a white crystalline state, and the cell size of the open-cell foams is large. Because of this large cell size, the effect of scrubbing at the time of pipe cleaning of the concrete pump will be increased and the cleaning effect will be large.

The urethane foam can be manufactured by the following procedure. After mixing a polyol, an isocyanate, and a foaming agent in a predetermined ratio, stirring the mixture, pouring it into a mold and applying heat, the mixture is foamed at the same time as curing and the product is completed by completion of expansion. Pull this into a predetermined size with a grinder to make urethane foam for cleaning.

An open cell foam of natural rubber can be manufactured by the following procedure. After reducing viscosity of natural rubber by peptizing, the peptized rubber is mixed with additives, such as sulfur, a vulcanization accelerator, a vulcanization aid, a filler, and a pigment, and sodium bicarbonate. The mixture is weighed (sheeting) with a certain thickness. After a solvent is spread on the surfaces of the sheets, the sheets are laminated to make a block (thickness must be thick). The block is surface spread with a vulcanization ultra-accelerator (an accelerator with a very fast vulcanization speed) and the mold is filled with a smaller amount of block than the mold volume, and then the block will foam and the block will become foam until satisfied (foaming occurred with the surface ultra-accelerator being vulcanized first, preventing foaming gas inside the block from leaking out of the block first). The surface obtained from the mold is removed with a grinder and made into a prescribed size and commercialized.

However, the natural rubber made foam having an open-cell foam structure has several disadvantages. First, the manufacturing process is long, complicated, so that a lot of human resources are required, and the manufacturing process cost is high. Secondly, since it has an open cell structure, the concrete liquid (*i.e.* cement + water) at the time of cleaning the concrete pump penetrates into the center of the foam via open cells. At this time, when the flowing the cloth is cleaned, it is hard and the entire foam changes hard, so after cleaning it will immediately soak in the bucket and cement liquid soaked in about 24 hours until the cement liquid escapes completely. This procedure is very inconvenient. At this time, if the foam got settled mistakenly, the foam is once used and thrown away, which is costly, and the resource become wastefully useless. Also, even if the foam is immersed in water, the internal cement liquid cannot completely escape, so if it is used three or four times, it will lose its function and it will be difficult to reuse.

### Detailed Description of the Invention

According to one aspect of the present invention, there is provided a cleaning foam composition for concrete pump comprising: a polymer containing an olefin block copolymer (OBC) having a DSC melting point of 100 °C or higher and a natural or synthetic rubber; and a liquid softening agent.

According to a further aspect of the present invention, there is provided a concrete pump cleaning foam comprising a polymer foam formed by foaming a polymer containing an olefin block copolymer (OBC) having a DSC melting point of 100 °C or higher and a natural or synthetic rubber, wherein the polymer foam has a plurality of foam cells and a volume fraction of closed cells among the total volume of the foam cells is 70% or more.

According to another aspect of the present invention, there is provided a method for manufacturing a concrete pump cleaning foam comprising steps of: providing a mixture of a polymer containing an olefin block copolymer (OBC) having a DSC melting point of 100 °C or higher and a natural or synthetic rubber, a liquid softening agent, and one or more additives selected from the group consisting of a crosslinking agent, a foaming agent, a metal oxide, stearic acid, an antioxidant, zinc stearate, titanium dioxide, a crosslinking coagent, and a pigment; placing the mixture in a mold and pressurizing the mixture at elevated temperature to form a polymer foam; and after the foaming, polishing the surface of the polymer foam to separate closed cells into a surface.

### Mode for Carrying out the Invention

The present invention will be described in more detail with reference to the following exemplary embodiments.

In order to the problem of the internal penetration of concrete liquid which is disadvantage of an open cell foam of natural rubber as described above in the Background Art, the present invention is a closed-cell foam for cleaning concrete pump. There are several ways to produce closed-cell foam with good wash-ability of the concrete pipe and it is preferable to have the properties of the foam made. First, it is good to have low hardness so that it can easily introduce into the inlet of the concrete pipe. Secondly, it is better to have heat resistance because it will suffer shrinkage directly when receiving sunlight at high temperature in summer and using cleaning foam. Thirdly, in order to have excellent detergency inside the pipe, it is desirable that the foam is strongly adhered to the pipe, so that the repulsive force of the foam, that is, the repulsive elasticity is preferably large.

In order to make low hardness closed-cell foam, it can be made by crosslinking and foaming natural rubber or various kinds of synthetic rubbers. However, after production of the foam, the shrinkage rate is too large at room temperature. It is impossible and can be made by crosslinking and foaming ethylene copolymers such as EVA, EBA, and EMA and so on. However, this also means that shrinkage rate is high at summer high temperatures, which limit their practical use. Creating a low-hardness foam with a thermoplastic rubbers (TPR) such as SBS, SEBS, SEPS, 1,2-polybutadiene or the like, is ideal with good elasticity and low shrinkage ratio and the hardness of the polymer itself is too high. However, it is practically impossible to make with low hardness so that it can be used for concrete pump cleaning.

Thus, the inventors of the present invention have proposed a foam composition for concrete pump which comprises: a polymer containing an olefin block copolymer (OBC)-having a DSC melting point of 100 °C or higher and a natural or synthetic rubber; and a liquid softening agent.

In one embodiment, the olefin/α-olefin interpolymer used in the cleaning foam of the concrete pump is an olefin block copolymer (OBC). Since the olefin block copolymer has a melting point of at least 100 °C, it has an advantage of having excellent heat resistance when preparing a foam for a concrete pump, and when the melting point is less than the above range, the heat resistance is insufficient so that the foam shrinks due to high temperature direct sunlight during outdoor storage in the summer and the function as a specific washing form can be lost.

The olefin block copolymer (OBC) is a multi-block copolymer. The multi-block copolymer refers to a polymer including two or more chemically distinct zones or segments (also called "blocks") that are preferably bonded in a linear configuration, *i.e.* a polymer including chemically distinguished units that are bonded end-to-end to polymerized ethylene-based functional groups or propylene-based functional groups rather than in a pendant or graft configuration.

The olefin block copolymer (OBC) means an ethylene/α-olefin multi-block copolymer or a propylene/α-olefin multi-block copolymer. The olefin block copolymer includes ethylene or propylene and one or more copolymerizable α-olefin comonomers in a polymerized form. The olefin block copolymer is characterized by the presence of a plurality of blocks or segments of two or more polymerized monomer units having different chemical or physical properties.

Specific examples of such α-olefin comonomers include propylene, butene, 3-methyl-1-butene, 3,3-dimethyl-1-butene, pentene, pentene substituted with at least one methyl, ethyl or propyl group, hexene substituted with at least one methyl, ethyl or propyl group, heptene substituted with at least one methyl, ethyl or propyl group, octene substituted with at least one methyl, ethyl or propyl group, nonene substituted with at least one methyl, ethyl or propyl group, decene substituted with at least one ethyl, methyl or dimethyl group, dodecene substituted with at least one ethyl, methyl or dimethyl group, and styrene substituted with at least one ethyl, methyl or dimethyl group. Particularly preferred α-olefin comonomers may be propylene, butene (*e.g*., 1-butene), hexene, and octene (*e.g*., 1-octene or 2-octene). The ethylene content of the copolymer may be from about 60 mole% to about 99.5 mole%. In some embodiments, the ethylene content may be from about 80 mole% to about 99 mole%. In some embodiments, the ethylene content may be from about 85 mole% to about 98 mole%. Accordingly, the α-olefin content of the copolymer may be limited to the range of about 0.5 mole% to about 40 mole%. In some embodiments, the α-olefin content may be limited to the range of about 1 mole% to about 20 mole%. In some embodiments, the α-olefin content may be limited to the range of about 2 mole% to about 15 mole%. The distribution of the α-olefin comonomer is typically random and is uniform over different molecular weight fractions of the ethylene copolymer.

In some embodiments, the multi-block copolymer may be represented by the following formula:

**(AB)n**

wherein **n** is an integer of at least 1, preferably an integer greater than 1, for example, 2, 3, 4, 5, 10, 15, 20, 30, 40, 50, 60, 70, 80, 90, 100 or higher, **"A"** represents a hard block or segment, and **"B"** represents a soft block or segment. Preferably, **A** and **B** are linked in a linear configuration rather than in a branched or star configuration. The "hard" segment means a block of polymerized units in which ethylene or propylene is present in an amount greater than or equal to 95% by weight, in further embodiments, greater than or equal to 98% by weight. That is, the comonomer content in the hard segment, in some embodiments, is less than 5% by weight of the total weight of the hard segment in some embodiments, it is less than 2% by weight. In some embodiments, the hard segments are all or substantially all of ethylene or propylene. Meanwhile, the "soft" segment refers to a block of polymerized units in which the comonomer content is at least 5% by weight of the total weight of the soft segment, in some embodiment, at least 8% by weight, at least 10% by weight, or at least 15% by weight. In further embodiments, the soft segment comonomer content is greater than or equal to 20% by weight, greater than or equal to 25% by weight, greater than or equal to 30% by weight, greater than or equal to 35% by weight, greater than or equal to 40% by weight, greater than or equal to 45% by weight, 50% by weight or more, or 60% by weight or more.

In one embodiment, the olefin block copolymer may have a density of 0.85 g/cc to 0.91 g/cc, or 0.86 g/cc to 0.88 g/cc.

In one embodiment, the olefin block copolymer may have a melt index (MI) of 0.01 g/10 minutes to 30 g/10 minutes, 0.01 g/10 minutes to 20 g/10 minutes, 0.1 g/10 minutes to 10 g/10 minutes, 0.1 g/10 minutes to 5.0 g/10 minutes, 0.1 g/10 minutes to 1.0 g/10 minutes, or 0.3 to 0.6 g/10 minutes, as measured by ASTM D1238 (190 °C, 2.16 kg).

In one embodiment, the olefin block copolymer may have a polydispersity index (PDI) of 1.7 to 3.5, 1.8 to 3, 1.8 to 2.5, or 1.8 to 2.2 at the time of manufacture in a continuous process. When manufactured in a batch or semi-batch process, the olefin block copolymer may have a PDI of 1.0 to 3.5, 1.3 to 3, 1.4 to 2.5, or 1.4 to 2.

In one embodiment, the olefin block copolymer may contain 5 to 30% by weight, 10 to 25% by weight, or 11 to 20% by weight of the hard segment. The hard segments may contain 0.0 to 0.9 mole% of units derived from the comonomers. The olefin block copolymer may also contain 70 to 95% by weight, 75 to 90% by weight, or 80 to 89% by weight of the soft segment. The soft segment may contain less than 15 mole% or 9 to 14.9 mole% of units derived from the comonomers. In one embodiment, the comonomer may be butene or octene.

Since the olefin block copolymer has a chain structure in which the hard segment and the soft segment block alternate, it has high heat resistance as compared with ethylene random copolymer of similar hardness, and its elastic recovery property can have performance equal to or higher than that of styrene elastomers without causing dust problem or environmental problems.

In addition to the above essential components, the cleaning foam of the concrete pump according to one embodiment of the present invention can be foamed within a range that does not deviate from the requirement of the cleaning application of the concrete pump while maintaining low shrinkage ratio and hardness. Other polymers such as ethylene copolymer or polyolefin elastomers can additionally be used. Since ethylene copolymers and polyolefin elastomers which can be used as additional raw materials for the above polymers are resins with low hardness, their use facilitates the manufacture of the final product with low hardness.

The ethylene copolymer may be prepared by copolymerizing of i) ethylene and ii) at least one ethylenic unsaturated monomers selected from the group consisting of C₃-C₁₀ α-monoolefin, C₁-C₁₂ alkyl ester of unsaturated C₃-C₂₀ monocarboxylic acid, unsaturated C₃-C₂₀ mono- or di-carboxylic acid, unsaturated C₄-C₈ dicarboxylic acid, anhydrides of the dicarboxylic acid, and vinyl ester of saturated C₂-C₁₈ carboxylic acid.

Specific examples of ethylene copolymers include ethylene vinyl acetate (EVA), ethylene butyl acrylate (EBA), ethylene methyl acrylate (EMA), ethylene ethyl acrylate (EEA), ethylene methyl methacrylate (EMMA), ethylene butene copolymers (EB-Co), and ethylene octene copolymers (EO-Co). These ethylene copolymers may be used alone or as a mixture of two or more thereof.

In one embodiment, the polymer may be a polyolefin elastomer. The polyolefin elastomer may be prepared using one or more metallocene catalysts. The polyolefin elastomer is an ethylene copolymer or propylene copolymer.

These elastomeric resins are also commercially available and in non-limiting examples of ethylene-based polyolefin elastomers, under the trade name ENGAGE available from Dow Chemical Company, the trade name EXACT from Exxon, and the trade name TAFMER from Mitsui Chemicals.

In a non-limiting example of a propylene-based polyolefin elastomer, trade names THERMORUNTM and ZELASTM from Mitsubishi Chemical Corporation, trade names ADFLEXTM and SOFTELLTM from LyondellBasell, trade name VERSIFYTM from Dow Chemical Company, and trade name VISTAMAXXTM from Exxon Mobile.

In one embodiment, the polymer comprises natural rubber or synthetic rubber together with the olefin block copolymer. Adding the above polymer component, natural rubber or synthetic rubber improves the elasticity of the-foam, so that the adhesion between the foam and the pipe improves and detergency improves. The synthetic rubber may be selected from the group consisting of styrene butadiene rubber (SBR), butadiene rubber (BR), isoprene rubber (IR), nitrile butadiene rubber (NBR), chloroprene rubber (CR), chlorosulfonated polyethylene rubber (CSM), ethylene-propylene rubber (EPM), ethylene-propylene-diene rubber (EPDM), etc. It can be used alone or in combination of two or more.

The synthetic rubber may be a thermoplastic rubber (TPR) such as styrene butadiene styrene (SBS), styrene ethylene butylene styrene (SEBS), styrene ethylene propylene styrene (SEPS), 1,2-polybutadiene or a combination of two or more.

The natural rubber or synthetic rubber may be contained in an amount of 10 to 200 parts by weight, preferably 30 to 150 parts by weight, more preferably 40 to 130 parts by weight, based on 100 parts by weight of the olefin block copolymer. If the natural rubber or synthetic rubber is less than the above range, the effect of the rubber may be insignificant. When the natural rubber or synthetic rubber exceeds the above range, the shrinkage factor of the foam becomes large, the value of the commodity shrunk during the distribution is lost, and the cleaning effect becomes more and more worse, so that the number of times of repeated use can be reduced.

In the cleaning foam of the concrete pump according to one embodiment of the present invention, the liquid softening agent is contained in the olefin block copolymer and polymer containing natural rubber or synthetic rubber. The liquid softening agent plays the role of a function as foams which clean the pump by lowering the hardness of the foam. The liquid softening agent includes rubber process oil, liquid polybutene, silicone oil and the like.

The liquid softening agent may be contained in an amount of 10 to 75 parts by weight, preferably 20 to 70 parts by weight, more preferably 40 to 60 parts by weight, based on 100 parts by weight of the olefin block copolymer. If the liquid softening agent is below the above range, the foam may have a high hardness and cannot be introduced into the pipe upon cleaning. If the liquid softening agent exceeds the above range, the effect of cleaning in which the hardness is too low to clean a pump effectively, and it is difficult to crosslink and it becomes difficult to produce the foam, while the strength of the foam becomes extremely low, it can easily be broken during cleaning.

In the cleaning foam composition of the concrete pump according to one embodiment of the present invention, a crosslinking agent, a foaming agent, and one or more additives selected from the group consisting of a metal oxide, stearic acid, an antioxidant, zinc stearate, titanium dioxide, a crosslinking coagent, a pigment, and a filler may be further included.

The raw material composition for preparing the cleaning foam of the concrete pump includes any known foaming agent which contains any gas material containing gas materials decomposed into gases and other byproducts, volatile liquids and chemical agents (also known as a foam generating agent or a swelling agent). The aforesaid foaming agent is preferably used in an amount of 0.1 to 6 parts by weight, based on 100 parts by weight of the polymer by using an azo compound having a decomposition temperature of 150 to 210°C by adding it for producing a foam. If the amount used is less than 0.1 part by weight, the specific gravity may increase and the hardness may be excessively high. When the amount exceeds 6 parts by weight, the specific gravity falls below 0.10, and the strength of the foam decreases. If the decomposition temperature is lower than 150 °C, premature foaming occurs during the production of the compound, and when it exceeds 210 °C, the molding time of the foam takes 15 minutes or more, so productivity can be lowered.

Suitable foaming agents include chemical foaming agents and physical foaming agents. Typical foaming agents include, but are not limited to, nitrogen, carbon dioxide, air, methyl chloride, ethyl chloride, pentane, isopentane, perfluoromethane, chlorotrifluoromethane, dichlorodifluoromethane, trichlorofluoromethane, perfluoroethane, 1-chloro-1,1-difluoroethane, chloropentafluoroethane, dichlorotetrafluoroethane, trichlorotrifluoroethane, perfluoropropane, chloroheptafluoropropane, dichlorohexafluoropropane, perfluorobutane, chlorononafluorobutane, perfluorocyclobutane, azodicarbonamide (ADCA), azodiisobutyronitrile, benzenesulfonhydrazide, 4,4-oxybenzene sulfonyl-semicarbazide, p-toluene sulfonyl semicarbazide, barium azodicarboxylate, N,N'-dimethyl-N,N'-dinitrosoterephthalamide, and trihydrazinotriazine. Generally, ADCA is a desirable foaming agent.

The crosslinking agent may be an organic peroxide crosslinking agent capable of sufficiently collecting the decomposed gas generated by the foaming agent and imparting high-temperature viscoelasticity to the resin in the amount of 0.02 to 4 parts by weight based on 100 parts by weight of the polymer. It is preferable to use 0.02 to 1.5 parts by weight, more preferably 0.05 to 1.0 parts by weight, and the 1 minute half-life temperature is 130 to 180 °C. If it is less than 0.02 part by weight in the amount used, crosslinking is insufficient and the high-temperature viscoelasticity of the resin at the time of decomposition of the foam is not maintained, and not only hardness abruptly increases due to crosslinking when it exceeds 1.5 parts by weight, the phenomenon of tearing of the foam and cracking of the wall of bubbles of the foam can be generated continuously. Examples of these crosslinking agents include organic peroxides commonly used in rubber compounding, such as t-butyl peroxy isopropyl carbonate, t-butyl peroxylaurate, t-butyl peroxyacetate, di-t-butyl peroxyphthalate, t-dibutyl peroxy maleic acid, cyclohexanone peroxide, t-butyl cumyl peroxide, t-butyl hydroperoxide, t-butyl peroxybenzoate, dicumyl peroxide, 1,3-bis(t-butylperoxyisopropyl)benzene, methyl ethyl ketone peroxide, 2,5-dimethyl-2,5-di(benzoyloxy)hexane, 2,5-dimethyl-2,5-di(t-butylperoxy)hexane, di-t-butyl peroxide, 2,5-dimethyl-2,5-(t-butylperoxy)-3-hexane, n-butyl-4,4-bis(t-butylperoxy) valerate, and α,α'-bis(t-butylperoxy)diisopropylbenzene and the like.

The other additives are metal oxides, stearic acid, antioxidants, zinc stearate, titanium dioxide, crosslinking coagent which are generally used in the production of foams to aid the processing properties and improve the physical properties of the foams. It is also possible to use various additives such as ordinary additives used in the production of foams and also considering the color, various pigments can be used. The additives may be added in an amount of 4 to 15 parts by weight, based on 100 parts by weight of the polymer. As the metal oxide, zinc oxide, titanium oxide, cadmium oxide, magnesium oxide, mercuric oxide, tin oxide, lead oxide, calcium oxide and the like can be used for improving physical properties of the foam, and the polymer of 1 to 4 parts by weight, based on 100 parts by weight of the polymer can be used. Also, in order to adjust the molding time when the press is 150 to 170 °C, 5 to 10 minutes, it is preferable to use 0.05 to 0.5 part by weight based on 100 parts by weight of the polymer of the triallyl cyanurate (TAC). If the crosslinking coagent have less than 0.05 part by weight, the effect of crosslinking coagent is insufficient, but if the crosslinking coagent exceeds 0.5 part by weight, similarly to the case where the used amount of the crosslinking agent exceeds 1.5 parts by weight and crosslinking not only the hardness increases abruptly but also the current state where the foam tears and the wall of the bubble of the foam break and the phenomenon of saturation of the continuous process can occur.

Stearic acid and zinc stearate make foam cells finely and uniformly to facilitate demolding during foam molding, and it is generally preferable to use 1 to 4 parts by weight, based on 100 parts by weight of the polymer. Examples of antioxidants suitable for use in the foam composition include Sonnoc, butylated hydroxytoluene (BHT), and Songnox 1076 (octadecyl 3,5-di-tert-butyl hydroxyhydrocinnamate). The antioxidant is typically used in an amount of 0.25 to 2 parts by weight, based on 100 parts by weight of the polymer. Titanium dioxide is used as a white pigment and performs the same function as the above-mentioned metal oxide. Titanium dioxide is typically used in an amount of 2 to 5 parts by weight.

Fillers that can be included in the composition serve to reduce the cost of the composition. Examples of suitable fillers include silica (SiO₂), MgCO₃, CaCO₃, talc, Al(OH)₃, Mg(OH)₂ and the like, and generally used in an amount of 10 to 50 parts by weight, based on 100 parts by weight of the polymer. The filler may also be used as an abrasive for increasing the detergency of the foam.

According to another aspect of the present invention, a foam for cleaning a concrete pump is provided. The cleaning foam of the concrete pump is formed by foaming a polymer containing an olefin block copolymer (OBC) having a DSC melting point of 100 °C or higher and a natural rubber or synthetic rubber. The polymer foam has a plurality of foam cells. Closed cells account for at least 70% of the total volume of the foam cells.

The polymeric foam may be compressed by an external force as a crosslinked (partially crosslinked or completely crosslinked) low-density polymer, and has property of recovering the original size again when the external force is removed. Therefore, when the cleaning foam of the concrete pump is inserted into one end of the pipe and sucked into the vacuum from the opposite side, the foam for cleaning of the concrete pump is compressed and introduced and re-inflated, the concrete residues remaining inside of the pipe is cleaned. The cleaning foam of the expanded concrete pump has the effect of wiping the surface of the concrete pump rough and scraping the surface inside the pipe of the concrete pump.

A cleaning foam for a concrete pump according to one embodiment of the present invention is characterized by having following characteristics. The cleaning foam of the concrete pump is generally relatively low density and can be 0.30 g/cc or less. For example, the density of the cleaning foam of the concrete pump can be 0.05 to 0.30 g/cc, preferably 0.05 to 0.25 g/cc, more preferably 0.05 to 0.20 g/cc, even more preferably 0.10 to 0.20 g/cc. Below the above range, the strength of the foam may be weak and it may be broken. If it exceeds the above range, the softness of the foam used to clean the pipe of the concrete pump as a closed cell foam may not be sufficient.

It is preferable that the foam for cleaning of the concrete pump has a hardness of a certain level or higher in order to obtain the effect of detergency. If the foam has an excessively high hardness, it is not easy to put the foam into a pipe. In general, the suitable hardness range of the cleaning foam of the concrete pump should have a Shore 00 hardness of 10 to 40, preferably 15 to 35. When the hardness is too low, the adhesion between the foam and the pipe decreases and the detergency can be reduced.

Generally, the cleaning foam of the concrete pump produced has a relatively small average bubble (cell) size, typically a bubble size of about 2 mm to about 3 mm. Average bubble size can be measured in accordance with for example, ASTM D3576-77. In one embodiment, the cleaning foam of the concrete pump generally has a cell size of about 1 mm to about 4 mm. If the cell diameter is less than 1 mm, the scrubbing effect decreases, and when it is larger than 4 mm, the adhesion of the foam to the inner surface of the pipe decreases, and as a result the cleaning effect may decrease. Preferably, it is best to have an average bubble size of 2 to 3 mm. It is desirable that at least 90% of the bubbles have a distribution of 1 to 4 mm in size.

The cleaning foam of the concrete pump produced may generally have a large number of closed cells and a small number of open cells. The relative amount of closed cells can be measured, for example, in accordance with ASTM D2856-A. In one embodiment, the foam cells of the cleaning foam of the concrete pump may be almost closed cells rather than open cells, for example foam cells of a foam for cleaning of the concrete pump account for at least about 70%, preferably at least about 80%, more preferably at least about 85% of the foam cells (closed cells + open cells) of the foam. When the closed cells account for 70% or more of the foam cells of the foam, the foam has a compressive force suitable for cleaning of the concrete pump and can easily wash the concrete attached to the surface of the foam after cleaning the pipe. It has excellent reusability of the foam. The closed cells of the foam cells differ depending on the foaming process but may be 90% or less by volume, 95% or less by volume, 98% or less by volume, 99% or less by volume, 99.5% or less by volume, or 100% or less by volume.

When the degree of crosslinking at the time of opening the mold is high during the process of manufacturing the foam for cleaning the concrete pump, walls between the foamed cells are destroyed during inflation of the foam cells, and some open cells are also formed. In a severe case, the proportion of open cells may exceed 30% or more of the foam cells. In this case, undesirable drawbacks of natural rubber foam having the open-cell structure may arise, as described above.

In the case where a cleaning foam of a concrete pump having foam cells, most of which are open foam cells, like polyurethane foam, urea foam or latex foam, is used for concrete pump cleaning, air may exit from the inside of the foam cells when the foam is pressed. Therefore, when such a cleaning foam of a concrete pump is introduced into the pipe of the concrete pump, it is loosened inside the pipe and the cleaning effect may thus sometimes deteriorate.

It is preferable that the closed cells are separated into the surface of the concrete pump cleaning foam. A skin layer with a constant thickness may be present on the surface of the concrete pump cleaning foam manufactured by a foaming process, etc. in the mold, and a the skin layer is formed between the foam and the pipe. Since the frictional force between the foam and the pipe is weakened and the scrubbing effects is also weakened, it is preferable to remove the skin layer with a grinder, etc. As a result, closed cells are exposed on the surface of the concrete pump cleaning foam. For example, the closed cells may occupy 70% or more, preferably 85% or more of the exposed surface of the entire surface area of the foam. Within the above range, the cleaning foam can be transferred smoothly through the pipe.

According to another aspect of the present invention, a method for manufacturing the concrete pump for a cleaning foam is provided. For example, the concrete pump cleaning foam may be made by a foaming process of a polymer. Raw materials suitable for manufacturing the concrete pump cleaning foam for a concrete pump by a foaming process may comprise a crosslinking agent for foam processing, a foaming agent, and other additives, including a filler and a pigment, as well as the base polymer. The raw materials for manufacturing the concrete pump cleaning foam are mixed in a kneading machine such as a kneader, Banbury mixer, etc. and are sheeted or pelletized using a roll mill. Thereafter, a specimen in the form of a foam can be obtained in such a manner that the sheets or pellets are crosslinked in a mold of a pressurization press under constant temperature (for example, 150 to 250 °C) and pressure (for example, 100 to 300 kg/cm²) conditions and foamed after the mold is opened and formed, or they are crosslinked by molding in an injection foaming machine equipped with a mold and foamed after the mold is opened. The specimen may be obtained in various shapes such as hexahedral, cylindrical, spherical and other shapes depending on the form of the mold, subsequent processing, etc. The polymer foam may have a shape capable of adhering to the inner surface of a pipe of a concrete pump. Preferably, for cleaning inside the pipe, the concrete pump cleaning foam has a size slightly larger than the pipe inner diameter. The diameter and shape of the concrete pump cleaning foam differ depending on the dimensions of the pipe. The concrete pump cleaning foam usually has a diameter of 50 to 300 mm, for example, 150 to 200 mm, and may have a spherical or cylindrical shape.

The concrete pump cleaning foam according to one embodiment of the present invention may also be manufactured by the following method. First, a mixture of a polymer containing an olefin block copolymer having a DSC melting point of at least 100 °C or higher and a natural or synthetic rubber, a liquid softening agent, one or more additives selected from the group consisting of a crosslinking agent, a foaming agent, a metal oxide, stearic acid, an antioxidant, zinc stearate, titanium dioxide, a crosslinking coagent and a pigment, and organic or inorganic fine particles having a diameter of 0.3 to 2 mm is provided.

The organic or inorganic fine particles serve as nuclei for forming bubbles. The kind of the organic or inorganic fine particles include those obtained by freezing plastics with liquid nitrogen or the like, sand, quartz sand and the like. The quartz sand is preferred because the plastic pulverized product is expensive and the sand is broken due to its low strength during mixing.

The size of open cells may be determined depending on the size of the organic or inorganic fine particles. Next, the mixture is put into a mold and foamed by pressurization at 150 to 200 °C for 10 to 15 minutes to form the polymer foam.

The density of the polymer foam formed by the above method may be 0.3 g/cc or less. The closed cells may be from 1 to 4 mm in average diameter and may account for at least 70% of the total volume of the foam cells.

A skin layer having a certain thickness can be formed on the surface of the cleaning foam immediately after foaming is finished. When the surface of a skin layer is present, the frictional force between the foam and the pipe is weakened and the scrubbing effect is weakened, so it is preferable to remove the skin layer on the surface of the cleaning foam via grinding.

The cleaning foam having a closed cell structure can be sufficiently reused by washing and then brushing off concrete adhering to the surface of the foam escaping through the pipe after cleaning and simply washing the foam with water. The cleaning foam is much cheaper in terms of raw cost compared to conventional open-cell foam, because it can be reused more than 20 times or more, although it can be recycled until the detergency due to the decrease in diameter due to wear decreases

The present invention will be explained in more detail with reference to the following examples. However, these examples are not intended to limit the technical spirit of the present invention.

### <EXAMPLES>

1. OBC-1: Ethylene octene copolymer (density 0.866 g/cm³, MI 15, melting point: 118 °C)
2. OBC-2: Ethylene octene copolymer (density 0.857 g/cm³, MI 20, melting point: 95 °C)
3. Ethylene Copolymer-1: Ethylene vinyl acetate copolymer (VA 33 wt%, MI 3.0)
4. Ethylene Copolymer-2: Ethylene vinyl acetate copolymer (VA 28 wt%, MI 3.0)
5. Polyolefin Elastomer-1: Ethylene octene copolymer (density 0.865 g/cm³, MI 3.0, melting point 60 °C)
6. Synthetic Rubber-1: Styrene butadiene rubber (SBR 1502)
7. Synthetic Rubber-2: Styrene ethylene butylene styrene rubber (styrene 20 wt%)
8. Process Oil-1: Paraffinic process oil

### (Test Methods)

### 1. Test for measuring the proportion of open cells

The proportion of open cells was measured in accordance with ASTM D2856-A.

### 2. Shrinkage rate

Foams were produced in respective blending ratios. Each of the foams was ground into a ball having a diameter of 170 mm, placed in an oven, and then stored at 35 °C for 30 days, the shrinkage rate of the ball was measured. The ball was judged to be "good" when the shrinkage rate was less than 1% and "poor" when the shrinkage rate was greater than or equal to 1%.

### 3. Concrete cleaning efficiency

Each ball having a diameter of 170 mm produced in the shrinkage rate test was inserted into the pipe with a 150 mm inner diameter of a concrete pump at the end of the pipe after concrete pumping work was over. After one-time sucking in vacuum from the other side, the inner surface of the pipe was washed with water. At this time, the amount of cement washed out with the water was observed with naked eyes. The ball was judged to be "good" and "poor" when the amount of the washed-out cement was smaller than or equal to and larger than that when using a commercial natural rubber open-cell foam, respectively.

### 4. Degrees of tearing of the foams after cleaning

After pumping work was over, the pipe with a 150 nm inner diameter of a concrete pump was cleaned with each of the 170 mm diameter foams in the form of balls. After washing with water, the state of tearing of the cells of the surface was observed. The foam was judged to be "good" and "poor" when the state was better than or equal to and worse than that when using a commercial natural rubber open-cell foam, respectively.

### 5. States of the foams 24 h after cleaning

After pumping work was over, the pipe with a 150 nm inner diameter of a concrete pump was cleaned with each of the 170 mm diameter foams in the form of balls. Thereafter, concrete stuck to the foam surface was brushed off and was then washed off in water with mild shaking. The foam was stored at room temperature and dried. Then, the hardened surface state was classified as "good" or "poor" after examination by finger touch.

### 6. Number of times of repeated use

After pumping work was over, the pipe with a 150 nm inner diameter of a concrete pump was cleaned with each of the 170 mm diameter foams in the form of balls. Thereafter, concrete stuck to the foam surface was brushed off and was then washed off in water with mild shaking. The foam was stored at room temperature and dried. The foam was repeatedly used until its diameter decreased to 165 mm, and the number of times of repeated use was recorded. The foam whose open cell proportion was equal to or greater than 30% was stored in water for 24 h and dried. The number of times of repeated use was recorded.

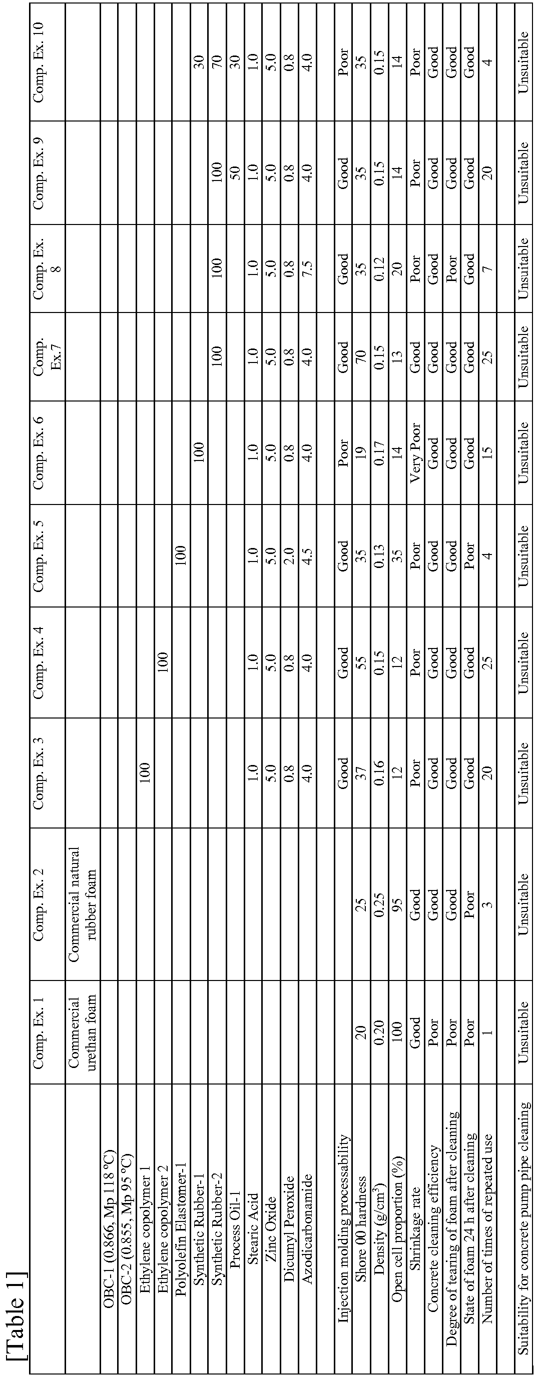

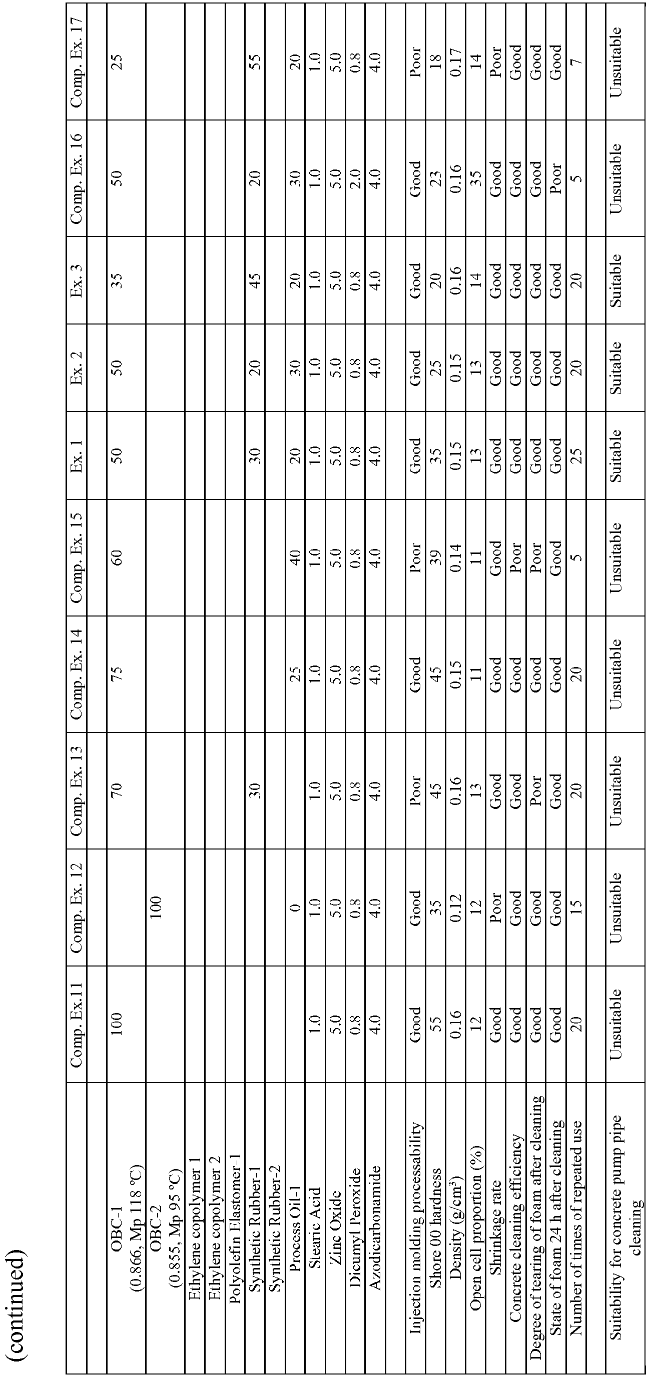

Referring to Table 1, since the commercial urethane foam of Comparative Example 1 and the commercial natural rubber foam of Comparative Example 2 had open cell structures, their concrete cleaning efficiencies, the degrees of tearing after cleaning, the states 24 h after cleaning, etc. were poor. The foams of Comparative Examples 3-12, which were manufactured using one of the OBC, the ethylene copolymer, the POE, the synthetic rubber, etc., were disadvantageously found to have high shrinkage or hardness values. The foams of Comparative Examples 13-15, which were manufactured without using one of the OBC, the rubber, and the liquid softening agent, were poor in physical properties. The foam of Comparative Example 16 was excessively vulcanized due to the presence of a large amount of the peroxide. This excessive vulcanization caused tearing of the cell walls upon foaming to form a large number of open cells. As a consequence, the state of the foam 24 h after cleaning was poor because the volume of the closed cells decreased to less than 70%. The foam of Comparative Example 17 showed poor shrinkage rate and reusability due to the high content of the rubber.

On the other hand, the foams of Examples 1-3, which were manufactured using the OBC, the synthetic rubber, and the liquid softening agent simultaneously, met all requirements in terms of basic physical properties as cleaning foams.

## Claims

1. A cleaning foam composition for concrete pump comprising: a polymer containing an olefin block copolymer (OBC) having a DSC melting point of 100 °C or higher and a natural or synthetic rubber; and a liquid softening agent.

2. The cleaning foam composition for concrete pump according to claim 1, wherein the natural or synthetic rubber is contained in an amount of 10 to 200 parts by weight, based on 100 parts by weight of the olefin block copolymer.

3. The cleaning foam composition for concrete pump according to claim 1, wherein the liquid softening agent is contained in an amount of 10 to 75 parts by weight, based on 100 parts by weight of the olefin block copolymer.

4. The cleaning foam composition for concrete pump according to claim 1, further comprising one or more additives selected from the group consisting of a crosslinking agent, a foaming agent, a metal oxide, stearic acid, an antioxidant, zinc stearate, titanium dioxide, a crosslinking coagent, a pigment, and a filler.

5. The cleaning foam composition for concrete pump according to claim 4, further comprising organic or inorganic fine particles having a diameter of 0.3 to 2 mm.

6. A concrete pump cleaning foam comprising a polymer foam formed by foaming a polymer containing an olefin block copolymer (OBC) having a DSC melting point of 100 °C or higher and a natural or synthetic rubber, wherein the polymer foam has a plurality of foam cells and a volume fraction of closed cells among the total volume of the foam cells is 70% or more.

7. The concrete pump cleaning foam according to claim 6, wherein the polymer foam has a density of 0.3 g/cc or less.

8. The concrete pump cleaning foam according to claim 6, wherein the closed cells are from 1 mm to 4 mm in average diameter.

9. The concrete pump cleaning foam according to claim 6, wherein the closed cells are separated into a surface of the polymer foam.

10. The concrete pump cleaning foam according to claim 6, wherein the polymer foam has a shape that is strongly adhered to the inner surface of a pipe of a concrete pump.

11. The concrete pump cleaning foam according to claim 10, wherein the polymer foam has a spherical or cylindrical shape.

12. The concrete pump cleaning foam according to claim 11, wherein the polymer foam has a diameter of 50 to 300 mm.

13. The concrete pump cleaning foam according to claim 6, wherein the polymer foam has a Shore 00 hardness of 10 to 40.

14. The concrete pump cleaning foam according to claim 6, wherein the foam has a shrinkage rate of less than 1% after storage at 50 °C for 30 days.

15. A method for manufacturing a concrete pump cleaning foam, the method comprising: providing a mixture of a polymer containing an olefin block copolymer (OBC) having a DSC melting point of 100 °C or higher and a natural or synthetic rubber, a liquid softening agent, and one or more additives selected from the group consisting of a crosslinking agent, a foaming agent, a metal oxide, stearic acid, an antioxidant, zinc stearate, titanium dioxide, a crosslinking coagent, and a pigment; placing the mixture in a mold and pressurizing the mixture at elevated temperature to form a polymer foam; and after the foaming, polishing the surface of the polymer foam to separate closed cells into a surface.

16. The method according to claim 15, wherein the mixture further comprises organic or inorganic fine particles having a diameter of 0.3 to 2 mm.

17. The method according to claim 15, wherein the polymer foam has a density of 0.3 g/cc or less, the closed cells are from 1 to 4 mm in average diameter, and a volume fraction of closed cells among the total volume of the foam cells is 70% or more.
